# EUROPÄISCHE PATENTSCHRIFT

(11) **EP 2 193 164 B1**
(45) Veröffentlichungstag und Bekanntmachung des Hinweises auf die Patenterteilung: **25.06.2014**
(21) Anmeldenummer: 08804164.5
(22) Anmeldetag: 12.09.2008
(51) Int. Cl.: C08K 5/10, C08K 5/09

(54) **EINE THERMOPLASTISCHE ZUSAMMENSETZUNG BEINHALTEND EIN FORMTRENNMITTEL BASIEREND AUF GEHÄRTETEN VEGETABILEN ESTERN**
THERMOPLASTIC COMPOSITION CONTAINING A MOLD RELEASE AGENT WHICH IS BASED ON CURED VEGETABLE ESTERS
COMPOSITION THERMOPLASTIQUE CONTENANT UN AGENT DE DÉMOULAGE À BASE D'ESTERS VÉGÉTAUX DURCIS

(30) Priorität: 13.09.2007 DE 102007043755
(43) Veröffentlichungstag der Anmeldung: 09.06.2010
(73) Patentinhaber: Emery Oleochemicals GmbH, 40589 Düsseldorf (DE)
(72) Erfinder: DAUTE, Peter, 27616 Beverstedt (DE)
(74) Vertreter: Kinkeldey, Daniela
(86) Internationale Anmeldenummer: PCT/EP2008/062203
(87) Internationale Veröffentlichungsnummer: WO 2009/037214

(56) Entgegenhaltungen:
- JP-A- 2006 124 451
- US-A- 6 008 280

## Beschreibung

Estern aromatischen Polyester aus mindestens einer aromatischen Dicarbonsäure und mindestens einem aliphatischen Diol erhalten wurde.

Die vorliegende Erfindung betrifft eine thermoplastische Zusammensetzung, ein Verfahren zur Herstellung einer thermoplastischen Zusammensetzung, die durch dieses Verfahren erhältliche thermoplastische Zusammensetzung, ein Verfahren zur Herstellung eines auf einer thermoplastischen Zusammensetzung basierenden Formkörpers, einen durch dieses Verfahren erhältlichen Formkörper sowie die Verwendung eines Formtrennmittels beinhaltend eine Hydroxycarbonsäure, einen Ester aus einer Hydroxycarbonsäure oder einem Derivat einer Hydroxycarbonsäure oder aus einer Ketocarbonsäure oder einem Derivat einer Ketocarbonsäure und einem Alkohol mit einem oder mehreren Hydroxyl-Gruppen oder einer Verbindung aufweisend mindestens eine Epoxid-Gruppe, oder eine Mischung aus einer Hydroxycarbonsäure und dem Ester aus einer Hydroxycarbonsäure oder einem Derivat einer Hydroxycarbonsäure oder aus einer Hydroxycarbonsäure oder einem Derivat einer Hydroxycarbonsäure und ein oder mehreren von einem Alkohol mit einem oder mehreren Hydroxyl-Gruppen oder einer Verbindung mit mindestens einer Epoxid-Gruppe, wobei die thermoplastische Zusammensetzung einen aromatischen Polyester oder einen teilweise aromatischen Polyester beinhalt, wobei bei dem aromatischen Polyester alle Esterverknüpfungen an die aromatischen Ringe angelagert sind und wobei bei der teilweise.

Thermoplastische Zusammensetzungen, welche auf thermoplastischen Polymeren basieren, werden aufgrund ihrer thermoplastischen Eigenschaften häufig zur Herstellung von Formkörpern eingesetzt. Dabei werden die thermoplastischen Zusammensetzungen auf eine Temperatur oberhalb der Glasübergangstemperatur der thermoplastischen Polymere erhitzt und anschließend beispielsweise mittels Spritzgießverfahren in ein Spritzgießwerkzeug eingespritzt, welches der Zusammensetzung seine gewünschte Form gibt.

Ein wirksames Formtrennverhalten ist jedoch eine Schlüsseleigenschaft für eine thermoplastische Zusammensetzung, um das effiziente und wirtschaftliche Verarbeiten zu Formkörpern beispielsweise mittels Spritzgießen zu ermöglichen. Normalerweise muss einer zur Herstellung von Formkörpern eingesetzten, thernoplastischen Zusammensetzung ein Formtrennmittel (MRA = "*mould release agent*") zugegeben werden, um dieses Verarbeitungsverhalten zu ermöglichen. Um als ein Formtrennmittel effektiv zu fungieren, muss ein solches Mittel oder eine solche Verbindung bei den Verarbeitungsbedingungen stabil sein, so dass es seine Wirksamkeit nicht verliert und/oder Verfärbung verursacht. Weiterhin darf das Formtrennmittel nicht mit den Polymeren und anderen Komponenten der Zusammensetzung chemisch interagieren oder die Zusammensetzung auf andere Art negativ beeinflussen. Bei transparenten oder transluzenten Polymeren sollte das Formtrennmittel die Transparenz nicht verschlechtern. Während des Spritzgießens sollte das Formtrennmittel keine Ablagerungen auf der Oberfläche der Form bilden, noch sollte es nach dem Formen in die Oberfläche des Teils in einem solchen Maß migrieren, dass es auf der Oberfläche sichtbar wird. Eine solche Ablagerung eines Formtrennmittels auf der Oberfläche eines Formkörpers wird als "Beschlag" bezeichnet.

US 2005/0234171 A1 beschreibt eine auf aromatischen Polycarbonaten oder Mischungen aus aromatischen Polycarbonaten und Polyestern basierende, thermoplastische Zusammensetzung, welche eine Mischung aus einem Fettsäureester eines Polyols mit 2 bis 6 Hydroxylgruppen und einer C₁₀-C₃₆-Carbonsäure und einem gesättigten α-olefinischen Oligomer als Formtrennmittel beinhaltet. Der Nachteil dieser thermoplastischen Zusammensetzung besteht jedoch unter anderem darin, dass das darin enthaltene Formtrennmittel, welches aus zwei chemisch unterschiedlichen Komponenten besteht (Fettsäureester und α-olefinisches Oligomer), in seiner chemischen Zusammensetzung sehr komplex ist. Außerdem ist die Transparenz der in der US 2005/0234171 A1 beschriebenen, thermoplastischen Zusammensetzung noch verbesserungsfähig.

Des weiteren weisen die im Stand der Technik, insbesondere in der US 2005/0234171 A1 eingesetzten Formtrennmittel eine hohe Flüchtigkeit auf, was dazu führt, dass aufgrund der hohen Temperaturen bei der Herstellung von Formkörpern ein Teil des Formtrennmittels entweicht. Dieses ist nicht nur aus toxikologischen Gründen bedenklich, sondern führt auch zur einer Verschlechterung des Ablöseverhaltens der thermoplastischen Zusammensetzunge an den Oberflächen eines Spritzgießwerkzeugs und leichter zu einer Vergilbung.

Der vorliegenden Erfindung lag die Aufgabe zugrunde, die sich aus dem Stand ergebenen Nachteile im Zusammenhang mit thermoplastischen Formmassen zumindest teilweise zu überwinden.

Eine erfindungsgemäße Aufgabe lag darin, ein Formtrennmittel zu schaffen, dass sich neben einer kostengünstigen Herstellbarkeit und guten Formtrenneigenschaften durch eine gute Umweltverträglichkeit auszeichnet und sich insbesondere durch seine gute biologische Abbaubarkeit zum Einsatz als Formtrennmittel bei der Herstellung von Fasern, Folien, Filmen und Formkörpern aus biologisch abbaubaren thermoplastischen Zusammensetzungen eignet.

Insbesondere lag der vorliegenden Erfindung die Aufgabe zugrunde, thermoplastische Zusammensetzungen, insbesondere jedoch hauptsächlich oder ausschließlich auf thermoplastischen Polyestern basierende, thermoplastische Zusammensetzungen anzugeben, die, wenn sie zur Herstellung von Formkörpern beispielsweise mittels Spritzgießverfahren eingesetzt werden, leicht von der Oberfläche des Spritzgießwerkzeugs abgelöst werden können, wobei die thermoplastische Zusammensetzung möglichst wenige, chemische unterschiedliche Bestandteile beinhaltet und daher auch mit möglichst wenigen Verfahrensschritten kostengünstige hergestellt werden kann.

Darüber hinaus lag der vorliegenden Erfindung die Aufgabe zugrunde, eine thermoplastische Zusammensetzung anzugeben, die eine im Vergleich zu den aus dem Stand der Technik bekannten, thermoplastischen Zusammensetzungen verbesserte Transparenz und auch ein im Vergleich zu den aus dem Stand der Technik bekannten, thermoplastischen Zusammensetzungen verbessertes Ablöseverhalten von der Oberfläche eines Spritzgießwerkzeugs zeigt. Insbesondere sollten bei der Verarbeitung der thermoplastischen Zusammensetzung, insbesondere bei der Herstellung von Formkörpern aus dieser thermoplastischen Zusammensetzung, möglichst weniger, wenn möglich sogar keine Komponenten dieser Zusammensetzung entweichen, so dass die toxikologische Belastung der mit der Herstellung von Formkörpern befassten Personen auf ein Minimum reduziert werden kann.

Der vorliegenden Erfindung lag weiterhin die Aufgabe zugrunde, ein Verfahren anzugeben, mit dem die vorstehend beschriebene, vorteilhafte thermoplastische Zusammensetzung hergestellt werden kann.

Weiterhin lag der vorliegenden Erfindung die Aufgabe zugrunde, ein Verfahren zur Herstellung eines Formkörpers anzugeben, bei dem eine thermoplastische Zusammensetzung nach dem Erhitzen auf eine Temperatur im Bereich der oder oberhalb der Glasübergangstemperatur der thermoplastischen Zusammensetzung in einen Formkörper überführt wird, wobei sich nach dem Erkalten des Formkörpers dieser im Vergleich zu den aus dem Stand der Technik bekannten Formkörpern, insbesondere im Vergleich zu den aus dem Stand der Technik auf thermoplastischen Polyestern basierenden Formkörper, noch besser von den Oberflächen des zur Herstellung des Formkörpers eingesetzten Werkzeugs ablösen lässt.

Auch lag der vorliegenden Erfindung die Aufgabe zugrunde, einen Formkörper, insbesondere einen auf einem thermoplastischen Polyester basierenden Formkörper anzugeben, der im Vergleich zu dem aus dem Stand der Technik bekannten, auf thermoplastischen Polyestern basierenden Formkörpern in kostengünstigerer Weise hergestellt werden kann und möglichst auch eine verbesserte Transparenz aufweist.

Einen Beitrag zur Lösung der eingangs genannten Aufgaben leistet eine thermoplastische Zusammensetzung beinhaltend
a) ein thermoplastisches Polymer, wie im Anspruch 1 definert,
b) ein Formtrennmittel, sowie
c) gegebenenfalls weitere Zusatzstoffe,
wobei das Formtrennmittel
- eine Hydroxycarbonsäure;
- einen, vorzugsweise mindestens teilweise gehärteten, Ester aus
   -- aus einer Hydroxycarbonsäure,
   -- aus einem Derivat einer Hydroxycarbonsäure,
   -- aus einer Ketocarbonsäure, oder
   -- aus einem Derivat einer Ketocarbonsäure, wobei Hydroxycarbonsäuren und deren Derivate bevorzugt sind,
      und ein oder mehrere von
   -- einem Alkohol mit einer oder mehreren Hydroxyl-Gruppen oder
   -- einer Verbindung mit einer oder mehreren Epoxid-Gruppen,
      wobei Alkohole mit einer oder mehreren Hydroyl-Gruppen bevorzugt sind;
   oder
- eine Mischung aus einer Hydroxycarbonsäure und dem Ester aus einer Hydroxycarbonsäure oder einem Derivat einer Hydroxycarbonsäure, einer Ketocarbonsäure oder einem Derivat einer Ketocarbonsäure, wobei Hydroxycarbonsäuren und deren Derivate bevorzugt sind, und ein oder mehrere von einem Alkohol mit einer oder mehreren Hydroxyl-Gruppen oder einer Verbindung mit einer oder mehreren Epoxid-Gruppen, wobei Alkohole mit einer oder mehreren Hydroyl-Gruppen, vorzugsweise mit 2 bis 10 Hydroxyl-Gruppen, bevorzugt sind,
beinhaltet.

In einer bevorzugten Ausgestaltung beinhaltet das Formtrennmittel einen, vorzugsweise mindestens teilweise gehärteten, Ester aus
-- aus einer Hydroxycarbonsäure, oder
-- aus einem Derivat einer Hydroxycarbonsäure,
   und
-- einem Alkohol mit einer oder mehreren Hydroxyl-Gruppen.

Unter "*gehärteten Estern*" werden vorliegen insbesondere vegetabile Ester verstanden, in denen die Carbonsäurebestandteile sich von, eine oder mehrer Doppelbindung aufweisenden, Vorläufern ableiten. Diese Doppelbindungen können zumindest teilweise oder vollständig durch Hydrieren beseitigt werden. Wenn nicht alle Doppelbindungen des Vorläufers beseitig sind, wird von einen teilgehärteten Ester besprochen, wobei vorzugsweise mindestens 50 Mol-% und besonders bevorzugt mindestens 70 Mol-% der Doppelbindungen des Vorläufers hydriert wurden, was sich beispielsweise durch NMR-Spektroskopie oder das ermitteln der Jod-Zahl bestimmen lässt.

Unter der Bezeichnung "*thermoplastisches Polomer*", wie sie hierin verwendet wird, werden Kunststoffe verstanden, die sich in einem bestimmten Temperaturbereich einfach (thermo-plastisch) verformen lassen. Dieser Vorgang ist reversibel und kann durch Abkühlung und Wiedererwärmung bis in den schmelzflüssigen Zustand beliebig oft wiederholt werden, solange nicht durch Überhitzung die thermische Zersetzung des Materials einsetzt.

Als weitere thermoplastische Polymere, welche in der erfindungsgemäßen Zusammensetzung enthalten sein können, kommen insbesondere thermoplastische Polyurethanen, thermoplastische Polyester, thermoplastische Polyamide, thermoplastische Polyolefine, thermoplastische Polyvinylester, thermoplastische Polyether, thermoplastische Polystyrole, thermoplastische Polyimide, thermoplastische Schwefelpolymere, thermoplastische Polyacetale, thermoplastische Fluorkunststoffe, thermoplastische Styrol-Olefin-Copolymere, thermoplastische Polyacrylate, thermoplastische Ethylen-Vinylacetat-Copolymere oder Gemische aus zwei oder mehr der vorstehend genannten, thermoplastischen Polymere in Frage.

Es ist jedoch erfindungsgemäß bevorzugt, dass das thermoplastische Polymer zu mehr als 90 Gew.-%, besonders bevorzugt zu mehr als 95 Gew.-%, darüber hinaus noch mehr bevorzugt zu mindestens 99 Gew.-% und am meisten bevorzugt zu 100 Gew.-%, jeweils bezogen auf das Gesamtgewicht des thermoplastischen Polymers, auf thermoplastischen Polyestern basiert. Unter Bezeichnung "Polyester", wie hierin verwendet wird, fallen insbesondere Polymere, die durch Polykondensationsreaktion zwischen einer Polycarbonsäure und einem Polyol (sogenannte "*AA*//*BB-Polyester*") oder durch Polykondensationsreaktion einer Hydroxycarbonsäure oder durch Ringöffnungspolymerisation eines cyclischen Esters (sogenannte "*AB-Polyester*") erhalten wurden. In einer erfindungsgemäßen Ausgestaltung, wie im die Ansprüche definiert. Polycarbonate, die durch Reaktion von Phosgen mit Diolen erhältlich sind, von dem erfindungsgemäß verwendeten Begriff "Polyester" ausgenommen sein.

Im Prinzip können alle derzeit bekannten, thermoplastischen Polyester und Copolyester als Komponente a) in der erfindungsgemäßen, thermoplastischen Zusammensetzung verwendet werden. Beispiele von solchen Polyestern umfassen im Wesentlichen lineare Polyester, die über eine Kondensationsreaktion von mindestens einer Polycarbonsäure, vorzugsweise einer Dicarbonsäure (zweiwertige Säure) oder einem Ester-bildenden Derivat davon und mindestens einem Polyol, vorzugsweise einem zweiwertigen Alkohol (Diol), hergestellt wurden. Die vorzugsweise zweiwertige Säure und der vorzugsweise zweiwertige Diol können beide entweder aliphatisch oder aromatisch sein, wobei jedoch nur aromatische und teilweise aromatische Polyester als thermoplastische Formmaterialien im Hinblick auf ihre hohen Erweichungspunkte und Hydrolysestabilität beansprucht sind. Bei aromatischen Polyestern sind im Wesentlichen alle Esterverknüpfungen an die aromatischen Ringe angelagert. Sie können halbkristallin sein und sogar flüssig-kristallines Verhalten zeigen oder amorph sein. Teilweise aromatische Polyester, die aus mindestens einer aromatischen Dicarbonsäure oder einem Ester-bildenden Derivat davon und mindestens einem aliphatischen Diol erhalten wurden, sind erfindungsgemäß besonders bevorzugt thermoplastische Polyester. Beispiele von geeigneten aromatischen Dicarbonsäuren umfassen Terephthalsäure, 1,4-Naphthalindicarbonsäure oder 4,4'-Biphenyldicarbonsäure. Beispiele von geeigneten aliphatischen Diolen umfassen Alkylendiole, speziell solche, die 2 bis 6 C-Atome, vorzugsweise 2 bis 4 C-Atome enthalten, wobei hier insbesondere Ethylenglykol, Propylendiole und Butylendiole zu nennen sind. Vorzugsweise werden zur Herstellung der in der erfindungsgemäßen Zusammensetzung als Komponente a) enthaltenen, thermoplastischen Polyester als Polyol- bzw. DiolKomponente Ethylenglykol, 1,2-Propylendiol, 1,3-Propylendiol oder 1,4-Butylendiol verwendet. Erfindungsgemäß besonders bevorzugte, thermoplastische Polyester, die durch Reaktion einer Dicarbonsäure mit einem Diol erhältlich sind, umfassen insbesondere Polyalkylenterephthalate, beispielsweise Polyethylenterephthalat (PET), Polypropylenterephthalat (PPT) oder Polybutylenterephthalat (PBT), Polyalkylennaphthalate, beispielsweise Polyethylennaphthalat (PEN) oder Polybutylennaphthalat (PBN), Polyalkylendibenzoate, beispielsweise Polyethylenbibenzoat sowie Mischungen aus mindestens zwei dieser thermoplastischen Polyester.

Diese vorstehend beschriebenen, teilweise aromatischen Polyester können gegebenenfalls eine geringe Menge an Einheiten enthalten, die aus anderen Dicarbonsäuren, beispielsweise Isophthalsäure, oder anderen Diolen wie Cyclohexandi-methanol, stammen, was im allgemeinen den Schmelzpunkt des Polyesters verringert. Eine spezielle Gruppe von teilweise aromatischen Polyestern sind sogenannte segmentierte oder Blockcopolyester, die zusätzlich zu den vorstehend genannten Polyestersegmenten (auch "harte Segmente" genannt), sogenannte "weiche Segmente" enthalten. Diese weichen Segmente stammen aus einem flexiblen Polymer; das heißt einem im Wesentlichen amorphen Polymer mit einer niedrigen Glasübergangstemperatur (T_{g}) und geringer Steifigkeit, mit reaktiven Endgruppen, vorzugsweise zwei Hydroxylgruppen. Vorzugsweise liegt die Glasübergangstemperatur dieser "weiche Segmente" unter 0°C, besonders bevorzugt unter - 20°C und am meisten bevorzugt unter - 40°C. Im Prinzip können mehrere unterschiedliche Polymere als weiches Segment verwendet werden. Geeignete Beispiele für "weiche Segmente" sind aliphatische Polyether, aliphatische Polyester oder aliphatische Polycarbonate. Die Molmasse der weichen Segmente kann innerhalb breiter Grenzen variieren, liegt aber vorzugsweise zwischen 400 und 6.000 g/mol.

Die Herstellung der vorstehend beschrieben, thermoplastischen Polyester ist unter anderem auch in "Encyclopedia of Polymer Science and Engineering", Band 12, Seiten 1 bis 75 und Seiten 217 bis 256; John Wiley & Sons (1988) und auch in "Ullmann's Encyclopedia of Industrial Chemistry", Band A21, Seiten 227 bis 251, VCH Publishers Inc. (1992) beschrieben. Erfindungsgemäß bevorzugte thermoplastische Polymere sind Polyethylentherephthalat (PET), und Polybutylenthe-rephthalt (PBT), wobei jeder dieser Polymere für sich in einer bevorzugten Ausgestaltung einer thermoplastischen Zusammensetzung der vorliegenden Erfindung zu mehr als 50 Gew.-%, vorzugsweise mehr als 75 Gew.-% und besonders bevorzugt mehr als 90 Gew.-%, jeweils bezogen auf die thermoplastische Zusammensetzung, enthalten sein kann.

Neben dem thermoplastischen Polymer als Komponente a) umfasst die erfindungsgemäße Zusammensetzung weiterhin als Komponente b) ein Formtrennmittel, welches
- eine Hydroxycarbonsäure;
- einen, vorzugsweise mindestens teilweise gehärteten, Ester
   -- aus einer Hydroxycarbonsäure,
   -- aus einem Derivat einer Hydroxycarbonsäure,
   -- aus einer Ketocarbonsäure, oder
   -- aus einem Derivat einer Ketocarbonsäure, wobei Hydroxycarbonsäuren und deren Derivate bevorzugt sind,
      und ein oder mehrere von
   -- einem Alkohol mit einer oder mehreren Hydroxyl-Gruppen oder
   -- einer Verbindung mit einer oder mehreren Epoxid-Gruppen,
      wobei Alkohole mit einer oder mehreren Hydroyl-Gruppen bevorzugt sind;
   oder
- eine Mischung aus einer Hydroxycarbonsäure und dem Ester aus einer Hydroxycarbonsäure oder einem Derivat einer Hydroxycarbonsäure, einer Ketocarbonsäure oder einem Derivat einer Ketocarbonsäure, wobei Hydroxycarbonsäuren und deren Derivate bevorzugt sind, und ein oder mehrere von einem Alkohol mit einem oder mehreren Hydroxyl-Gruppen oder einer Verbindung mit einer oder mehreren Epoxid-Gruppen, wobei Alkohole mit einer oder mehreren Hydroyl-Gruppen, vorzugsweise mit 2 bis 10 Hydroxyl-Gruppen, bevorzugt sind,
beinhaltet.

In einer bevorzugten Ausgestaltung beinhaltet das Formtrennmittel einen, vorzugsweise mindestens teilweise gehärteten, Ester aus
-- aus einer Hydroxycarbonsäure, oder
-- aus einem Derivat einer Hydroxycarbonsäure,
   und
-- einem Alkohol mit einer oder mehreren Hydroxyl-Gruppen.

Der Begriff "*Hydroxycarbonsäure*", wie er hierin verwendet wird, umfasst die Hydroxycarbonsäure in ihrer protonierten Form, die Hydroxycarbonsäure in ihrer deprotonierten Form (also insbesondere Salze der Hydroxycarbonsäure) als auch Mischungen der Hydroxycarbonsäure in ihrer protonierten Form und ihrer deprotonierten Form. Weiterhin umfasst der Begriff "*Hydroxycarbonsäure*" grundsätzlich alle Verbindungen, die mindestens eine Carbonsäure-Gruppe und mindestens eine Hydroxyl-Gruppe aufweisen. Er umfasst daher insbesondere auch Verbindungen, die neben der mindestens einen Carbonsäure-Gruppe und der mindestens einen Hydroxyl-Gruppe auch andere funktionelle Gruppen, wie etwa EtherGruppen, aufweisen.

Der Begriff "*Derivat einer Hydroxycarbonsäure*" umfasst alle Derivate einer Hydroxycarbonsäure, die bei einer Reaktion mit einem Alkohol zu einem entsprechenden Ester der Hydroxycarbonsäure führen. Insbesondere umfasst von dem Begriff "*Derivat einer Hydroxycarbonsäure*" sind die Säurechloride der Hydroxycarbonsäure sowie die Säureanhydride der Hydroxycarbonsäure. Diese Derivate weisen vorzugsweise eine im Vergleich zur Hydroxycarbonsäure gesteigerte Reaktivität der Carbonsäure-Gruppe auf, so dass bei einer Umsetzung mit einem Alkohol die Esterbildung begünstigt wird.

Als in der erfindungsgemäßen, thermoplastischen Zusammensetzung als Komponente b) enthaltenes Formtrennmittel werden demnach Formtrennmittel beinhaltend Hydroxycarbonsäuren, Ester, welche durch Reaktion einer Hydroxycarbonsäure oder eines Derivates einer Hydroxycarbonsäure mit einem Alkohol oder einem Epoxid erhalten werden, oder aber Mischungen aus der Hydroxycarbonsäure und dem Ester eingesetzt. Dabei ist es insbesondere bevorzugt, dass das Formtrennmittel zu mindestens 40 Gew.-%, besonders bevorzugt zu mindestens 50 Gew.-% und am meisten bevorzugt zu mindestens 70 Gew.-%, jeweils bezogen auf das Gesamtgewicht des Formtrennmittels, auf der Hydroxycarbonsäure, dem Ester oder der Mischung aus der Hydroxycarbonsäure und dem Ester basiert.

Als Hydroxycarbonsäure, welche als Formtrennmittel b) bzw. als Bestandteil des Formtrennmittels b) oder als Esterkomponente des Formtrennmittels b) eingesetzt wird, kommen insbesondere gesättigte oder ungesättigte Hydroxycarbonsäuren mit einer Anzahl an Kohlenstoffatomen in einem Bereich von 6 bis 26, besonders bevorzugt in einem Bereich von 8 bis 24, noch mehr bevorzugt in einem Bereich von 10 bis 22, darüber hinaus bevorzugt in einem Bereich von 12 bis 20 und am meisten bevorzugt in einem Bereich von 14 bis 18. Vorzugsweise tragen die Hydroxycarbonsäuren genau eine Hydroxyl-Gruppe, beispielsweise können sie aber auch zwei, drei, vier oder mehr als vier Hydroxyl-Gruppen tragen. Die Position der Hydroxyl-Gruppe relativ zur Carbonsäure-Gruppe oder zur derivatisierten Carbonsäure-Gruppe ist grundsätzlich unkritisch. So kann die Hydroxyl-Gruppe an demjenigen Kohlenstoffatom lokalisiert sein, welches benachbart zum Kohlenstoffatom der Carbonsäure-Gruppe oder derivatisierten Carbonsäure-Gruppe ist, denkbar ist aber auch, dass die Hydroxyl-Gruppe an einem Kohlenstoffatom lokalisiert ist, welches über eine Kohlenstoffkette von mindestens 2, 3, 4, 5, 6, 7, 8, 9, 10, 11, 12, 13, 14, 15, 16, 17, 18, 19, 20, 21, 22, 23, 24, 25 oder 26 vom Kohlenstoffatom der Carbonsäure-Gruppe oder derivatisierten Carbonsäure-Gruppe entfernt ist.

Geeignete Hydroxycarbonsäuren sind insbesondere ausgewählt aus der Gruppe bestehend aus Monohydroxymonocarbonsäuren, die 6 bis 26, besonders 8 bis 24, noch mehr bevorzugt 10 bis 22, darüber hinaus 12 bis 20 und am meisten bevorzugt 14 bis 18 Kohlenstoffatome aufweisen, wobei diese Monohydroxymonocarbonsäuren gesättigt oder ungesättigt, aliphatisch oder aromatisch sein können. Umfasst sind insbesondere alpha-Hydroxycarbonsäuren, beta-Hydroxy-carbonsäuren und *omega*-Hydroxycarbonsäuren. Erfindungsgemäß besonders geeignete Hydroxycarbonsäure umfassen insbesondere Hydroxyfettsäuren, wie beispielsweise Ricinolsäure, 12-Hydroxystearinsäure, hydrierte Kastorölfettsäuren (Fettsäuren, die kleine Mengen von Stearinsäure und Palmitinsäure, ebenso wie 12-Hydroxystearinsäure enthalten), Sabininsäure, 2-Hydroxytetradecansäure, Ipurolinsäure (3,11-Dihydroxytetradecansäure, 2-Hydroxyhexadecansäure, Jalapinolsäure, Juniperinsäure, Ambrettolsäure, Aleuritinsäure, 2-Hydroxyoctadecansäure, 18-Hydroxyoctadecansäure, 9,10-Dihydroxyoctadecansäure, Kamlolensäure, Ferronsäure, Cerebronsäure, 9-Hydroxystearinsäure und 10-Hydroxystearinsaure, wobei unter diesen Hydroxyfettsäuren 12-Hydroxystearinsäure, 9-Hydroxystearinsäure, 10-Hydroxystearinsäure, hydrierte Kastorölfettsäuren und Ricinolsäure besonders bevorzugt und 12-Hydroxystearinsäure und Ricinolsäure am meisten bevorzugt sind.

Weiterhin als Hydroxycarbonsäuren einsetzbar sind auch Ringöffnungsprodukte epoxidierter Carbonsäuren mit Alkoholen, Wasserstoff oder Carbonsäuren. Hierunter fallen beispielsweise epoxidierte Leinöl-, Sojaölfettsäuren und Ölsäure und jeweils deren Derivate.

Als Ketocarbonsäuren kommen grundsätzlich allem dem Fachmann als geeignet erscheinende bekannte Verbindungen dieser Stoffklasse in Betracht. Hierunter fallen insbesondere α-, β- und γ-Ketocarbonsäuren und deren Mischformen sowie Gemische aus mindestens zwei davon. Als α-Ketosäure ist beispielsweise die Brenztraubensäure (2-Oxo-propansäure), als β-Ketosäuren beispielsweise die A-cetessigsäure (3-Oxo-butansäure), als y -Ketopsäure beispielsweise Lävulinsäure (4-Oxo-pentansäure) und als sowohl α-, als auch β-Ketocarbonsäure beispielsweise die Oxalessigsäure (Oxobutandisäure) zu nennen. Hierunter fallen beispielsweise 9-, 10- oder 12-Ketostearinsäure und jeweils deren Derivate.

Grundsätzlich können zur Herstellung der Formtrennmittel durch Veresterung der Hydroxycarbonsäure mit Alkoholen die Hydroxycarbonsäuren auch in Kombination mit anderen Carbonsäuren, beispielsweise in Kombination mit Mono- oder Dicarbonsäuren, die keine Hydroxyl-Gruppen aufweisen, eingesetzt werden. In diesem Fall ist es jedoch bevorzugt, dass die Menge an Hydroxycarbonsäure, bezogen auf das Gesamtgewicht aus eingesetzten Carbonsäuren und Hydroxycarbonsäuren, vorzugsweise in einem Bereich von 10 bis 95 Gew.-%, besonders bevorzugt in einem Bereich von 50 bis 95 Gew.-% liegt.

Als Alkohol mit einer oder mehreren Hydroxyl-Gruppen werden vorzugsweise Alkohole mit einer Anzahl an Hydroxyl-Gruppen in einem Bereich von 2 bis 9, besonders bevorzugt 3 bis 8 und am meisten bevorzugt 3 bis 6 eingesetzt. Die Anzahl an Kohlenstoffatomen im Alkohol mit einer oder mehreren Hydroxyl-Gruppen liegt vorzugsweise in einem Bereich von 3 bis 30, besonders bevorzugt 3 bis 20 und am meisten bevorzugt 3 bis 10.

Unter diesen Alkoholen besonders bevorzugt sind insbesondere Glykol, Pentaerythrit, Dipentaerythrit, Tripentaerythrit, Bistrimethylolpropan, Inosit, Bistrimethylolethan, Trismethylolpropan (TMP), Sorbit, Maltit, Isomaltit, Lactit, Mannit, Lactose, Leucrose, Tris-(hydroxyethyl)isocyanurat (THEIC), Tetramethylolcyclohexanol, Tetramethylolcyclopentanol, Tetramethylolcyclopyranol, Glycerin sowie Umsetzungsprodukte dieser Polyole mit Ethylenoxid und/oder Propylenoxid, wobei Glycerin, Trismethylolpropan, Pentaerythrit ins Dipentaerythrit besonders bevorzugt sind.

Die Herstellung der als Formtrennmittel oder als Bestandteil des Formtrennmittels eingesetzten Ester aus einer Hydroxycarbonsäure und dem Alkohol mit einer oder mehreren Hydroxylgruppen kann durch jedes dem Fachmann bekannte Verfahren zur Herstellung eines Esters aus einer Carbonsäure und einem Alkohol erfolgen. Vorzugsweise erfolgt die Veresterung der Hydroxycarbonsäure mit dem Alkohol in Gegenwart eines Veresterungskatalysators. Als Veresterungskatalysatoren können Säuren, wie beispielsweise Schwefelsäure oder p-Toluolsulfonsäure, oder Metalle und deren Verbindungen eingesetzt werden. Geeignet sind beispielsweise Zinn, Titan, Zirkonium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität in der Regel erst bei Temperaturen oberhalb 180°C erreichen. Sie sind jedoch erfindungsgemäß bevorzugt, weil sie im Vergleich zur Protonenkatalyse weniger Nebenprodukte, wie beispielsweise Olefine, liefern. Erfindungsgemäß besonders bevorzugte Veresterungskatalysatoren sind eine oder mehrere zweiwertige Zinnverbindungen oder Zinnverbindungen bzw. elementares Zinn, die sich mit den Edukten zu zweiwertigen Zinnverbindungen umsetzen können. Beispielsweise kann als Katalysator Zinn, Zinn(II)chlorid, Zinn(II)sulfat, Zinn(II)alkoholate oder Zinn(II)salze von organischen Säuren, insbesondere von Mono- und Dicarbonsäuren. Besonders bevorzugte Zinnkatalysatoren sind Zinn(II)oxalat und Zinn(II)benzoat.

Die Durchführung der Veresterungsreaktion kann durch dem Fachmann bekannte Verfahren erfolgen. Dabei kann es insbesondere vorteilhaft sein, dass bei der Reaktion gebildete Wasser aus dem Reaktionsgemisch zu entfernen, wobei dieses Entfernen des Wassers vorzugsweise durch Destillation, gegebenenfalls durch Destillation mit im Überschuss eingesetzten Alkohol erfolgt. Auch kann nach Durchführung der Veresterungsreaktion nicht reagierter Alkohol aus dem Reaktionsgemisch entfernt werden, wobei auch diese Entfernung des Alkohols vorzugsweise mittels Destillation erfolgt. Weiterhin kann nach Beendigung der Veresterungsreaktion, insbesondere nach der Abtrennung von nicht umgesetztem Alkohol der im Reaktionsgemisch zurückbleibende Katalysator, gegebenenfalls nach Behandlung mit einer Base, durch eine Filtration oder durch Zentrifugieren abgetrennt werden.

Weiterhin ist es bevorzugt, die Veresterungsreaktion bei einer Temperatur in einem Bereich von 50 bis 300°C, besonders bevorzugt in einem Bereich von 100 bis 250°C und am meisten bevorzugt in einem Bereich von 100 bis 280°C, am meisten bevorzugt in einem Bereich von 150 bis 270°C und weiterhin bevorzugt in einem Bereich von 200 bis 250°C durchzuführen. Die optimalen Temperaturen hängen von dem/den Einsatzalkohol(en), dem Reaktionsfortschritt, der Katalysatorart und der Katalysatorkonzcntration ab. Sie können für jeden Einzelfall durch Versuche leicht ermittelt werden. Höhere Temperaturen erhöhen die Reaktionsgeschwindigkeiten und begünstigen Nebenreaktionen, wie beispielsweise Wasserabspaltung aus Alkoholen oder Bildung farbiger Nebenprodukte. Die gewünschte Temperatur oder der gewünschte Temperaturbereich kann durch den Druck im Reaktionsgefäss (leichter Überdruck, Normaldruck oder gegebenenfalls Unterdruck) eingestellt werden.

Neben der vorstehend beschriebenen, synthetischen Herstellung der Ester kommt grundsätzlich auch der Einsatz von pflanzlichen Estern aus Hydroxycarbonsäuren und Alkoholen oder der Einsatz von biotechnologisch Hergestellten Estern aus Hydroxycarbonsäuren und Alkoholen in Betracht.

Neben den vorstehend beschrieben, als Formtrennmittel oder als Bestandteil eines Formtrennmittels einsetzbaren Estern, die durch Veresterung der Hydroxycarbonsäuren mit Alkoholen, die eine oder mehrere Hydroxyl-Gruppen aufweisen, erhalten werden können, sind als Formtrennmittel weiterhin auch Verbindungen einsetzbar, die durch Umsetzung von Hydroxycarbonsäuren, vorzugsweise von den vorstehend beschriebenen Hydroxycarbonsäuren, insbesondere von den vorstehend beschriebenen Hydroxyfettsäuren, mit Verbindungen mit einer oder mehreren Epoxid-Gruppen erhalten werden können.

Weiterhin können auch Mischungen aus verschiedenen Estern, die jeweils durch Veresterung einer Hydroxycarbonsäure mit einem Alkohol bzw. einem Epoxid erhalten werden können, oder aber Mischungen aus mindestens einem Ester, der durch Veresterung einer Hydroxycarbonsäure mit einem Alkohol oder einem Epoxid erhalten werden kann, und mindestens einem weiteren Ester, der beispielsweise durch Veresterung einer Carbonsäure mit einem Alkohol oder einem Epoxid erhalten werden kann, als Formtrennmittel oder Bestandteil eines Formtrennmittels eingesetzt werden. Zu den zuletzt genannten Mischungen gehört beispielsweise Rizinusöl, welches ebenfalls als Formtrennmittel b) eingesetzt werden kann.

Gemäß einer besonders bevorzugten Ausführungsform der erfindungsgemäßen, thermoplastischen Zusammensetzung beinhaltet das als Komponente b) enthaltene Formtrennmittel ein Ester aus einer Hydroxycarbonsäure, vorzugsweise aus einer Monohydroxymonocarbonsäure, besonders bevorzugt aus einer Monohydroxyfettsäure, und einem Alkohol mit einer oder mehreren Hydroxyl-Gruppen, wobei die Monohydroxymonocarbonsäure eine gesättigte Monohydroxymonocarbonsäure, eine ungesättigte Monohydroxymonocarbonsäure oder eine Mischung aus einer gesättigten und einer ungesättigten Monohydroxymonocarbonsäure mit einer Kohlenstoffzahl in einem Bereich von 6 bis 26.

Weiterhin ist es im Zusammenhang mit dem als Formtrennmittel oder Bestandteil des Formtrennmittels (Komponente b) eingesetzten Ester aus einer Hydroxycarbonsäure und einem Alkohol mit mehreren Hydroxyl-Gruppen bevorzugt, dass nicht alle Hydroxyl-Gruppen des Alkohols verestert sind, sondern dass ein Teil der Hydroxyl-Gruppen unverestert bleibt. In diesem Zusammenhang ist es insbesondere bevorzugt, dass die Hydroxyl-Gruppen des Alkohols zu mindestens 5 Mol-%, besonders bevorzugt zu mindestens 10 Mol-%, noch mehr bevorzugt zu mindestens 20 Mol-%, darüber hinaus bevorzugt zu mindestens 30 Mol-%, darüber hinaus bevorzugt zu mindestens 40 Mol-% und am meisten bevorzugt zu mindestens 50 Mol-% nicht mit der Carbonsäure-Gruppe der Hydroxycarbonsäure verestert sind. Die Formulierung "*zu mindestens 5 Mol-% nicht mit der Carbonsäure-Gruppe der Hydroxycarbonsäure verestert*" soll dabei ausdrücken, dass in dem in der erfindungsgemäßen Zusammensetzung enthaltenen Formtrennmittel mindestens 5 Mol-% aller zur Herstellung des Formtrennmittels aus einer Hydroxycarbonsäure und einem Alkohol mit mehreren Hydroxyl-Gruppen im Alkohol ursprünglich vorhandenen Hydroxyl-Gruppen nicht verestert sind und daher auch im fertigen Formtrennmittel noch als Hydroxyl-Gruppe vorliegen.

Weiterhin können in der erfindungsgemäßen, thermoplastischen Zusammensetzung neben dem thermoplastischen Polymer (Komponente a) und dem Formtrennmittel (Komponente b) gegebenenfalls auch weitere Zusatzstoffe enthalten sein. Zu den weiteren Zusatzstoffen gehören insbesondere Schalgzähigkeitsmodifikatoren, Füllstoffmaterialien, Verstärkungsmittel, Flammverzögerungsverbindungen, Wärme- und UV-Stabilisatoren, Antioxidationsmittel, andere Verarbeitungshilfsmittel, Keimbildner, Farbstoffe und Antitropfmittel. Beispiele geeigneter Schalgzähigkeitsmodifikatoren, Füllstoffmaterialien, Verstärkungsmittel und Flammverzögerungsverbindungen sind unter anderem der US 2005/0234171 A1 zu entnehmen.

Weiterhin ist es im Zusammenhang mit der erfindungsgemäßen, thermoplastischen Zusammensetzung bevorzugt, dass die thermoplastische Zusammensetzung
a1) 60 bis 99,99 Gew.-%, besonders bevorzugt 80 bis 99,8 Gew.-% und am meisten bevorzugt 90 bis 99,6 Gew.-% des thermoplastischen Polymers,
b1) 0,01 bis 20 Gew.-%, besonders bevorzugt 0,1 bis 10 Gew.-% und am meisten bevorzugt 0,2 bis 5 Gew.-% des Formtrennmittels und
c1) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a) bis c) 100 Gew.-% beträgt.

In einer anderen erfindungsgemäßen Ausgestaltung ist es bevorzugt, dass die thermoplastische Zusammensetzung
a2) 1 bis 69,99 Gew.-%, besonders bevorzugt 1,5 bis 49,8 Gew.-% und am meisten bevorzugt 2 bis 19,6 Gew.-% des thermoplastischen Polymers,
b2) 0,01 bis 20 Gew.-%, besonders bevorzugt 0,1 bis 10 Gew.-% und am meisten bevorzugt 0,2 bis 5 Gew.-% des Formtrennmittels,
c2) mindestens 10 Gew.-%, vorzugsweise mindestens 20 Gew.-% und besonders bevorzugt mindestens 30 Gew.-% einer biologisch abbaubaren Füllkomponente und
d2) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a2) bis d2) 100 Gew.-% beträgt. Als biologisch abbaubare Füllkomponente kommen grundsätzlich alle dem Fachmann bekannten und geeignet erscheinenden in Betracht. Hierunter fallen insbesondere Ein- und Mehrfachzucker wie Stärke und Stärkederivate, Cellulose und Cellulosederivate, Hanf, Jute, Bast, Schilf, Reet, insbesondere Reetmehl, und andere aus Pflanzen gewonnene Stoffe oder eine Kombination aus mindestens zwei davon. Im Rahmen dieser Ausgestaltung ist es weiterhin bevorzugt, dass das thermoplastische Polymer zum mindestens 10 Gew.-%, vorzugsweise zu mindestens 50 Gew.-% und besonders bevorzugt zu mindestens 75 Gew.-%, jeweils bezogen auf das thermoplastische Polymer, auf einem aus nachwachsenden Rohstoffen erzeugbaren Monomer wie Milchsäure basiert. Diese thermoplastische Zusammensetzung eignet sich insbesondere für biologisch abbaubare Einweg- und Wegwerfartikel wie Geschirr oder Besteck.

Gemäß einer besonders Ausführungsform der erfindungsgemäßen, thermoplastischen Zusammensetzung ist es bevorzugt, wenn diese weniger als 0,001 Gew.-%, besonders bevorzugt weniger als 0,0005 Gew.-% und am meisten bevorzugt weniger als 0,0001 Gew.-% eines gesättigten, α-olefinischen Oligomers aus mindestens einem C₆-C₁₈ α-Olefin enthält.

Einen Beitrag zur Lösung der eingangs genannten Aufgabe leistet weiterhin ein Verfahren zur Herstellung einer thermoplastischen Zusammensetzung beinhaltend
a) ein thermoplastisches Polymer,
b) ein Formtrennmittel, sowie
c) gegebenenfalls weitere Zusatzstoffe,
beinhaltend die Verfahrensschritte:
i) Bereitstellen eines thermoplastischen Polymers wie in die Ansprüche definiert;
ii) Bereitstellen des Formtrennmittels beinhaltend eine Hydroxycarbonsäure, ein Ester aus einer Hydroxycarbonsäure oder einem Derivat einer Hydroxycarbonsäure und einem Alkohol mit einem oder mehreren Hydroxyl-Gruppen oder einer Verbindung mit einer oder mehreren Epoxid-Gruppen, oder eine Mischung aus einer Hydroxycarbonsäure und dem Ester aus einer Hydroxycarbonsäure oder einem Derivat einer Hydroxycarbonsäure und einem Alkohol mit einem oder mehreren Hydroxyl-Gruppen oder einer Verbindung mit einer oder mehreren Epoxid-Gruppen;
iii) gegebenenfalls Bereitstellen weiterer Zusatzstoffe;
iv) Vermischen der Komponenten i), ii) und gegebenenfalls iii).

Als thermoplastische Polymer, Formtrennmittel und weitere Zusatzstoffe sind diejenigen thermoplastischen Polymere, Formtrennmittel und weiteren Zusatzstoffe bevorzugt, die bereits eingangs im Zusammenhang mit der erfindungsgemäßen, thermoplastischen Zusammensetzung als bevorzugte thermoplastische Polymer, Formtrennmittel und weitere Zusatzstoffe genannt worden sind.

Diese Komponenten werden zunächst in den Verfahrensschritten i), ii) und gegebenenfalls iii) bereitgestellt. Sodann erfolgt im Verfahrensschritt iv) des erfindungsgemäßen Verfahrens das Vermischen der Komponenten i), ii) und gegebenenfalls iii).

Das Vermischen der Komponenten i), ii) und gegebenenfalls iii) kann dabei unter Nutzung bekannter Techniken erfolgen. So kann das Vermischen beispielsweise ein Trockenmischvorgang sein, bei dem die verschiedenen Komponenten unterhalb der Schmelzverarbeitungstemperatur des thermoplastischen Polymers gemischt werden, oder aber ein Schmelzmischverfahren, bei dem die Komponenten, gegebenenfalls vorgemischt und bei den Schmelzverarbeitungstemperaturen des thermoplastischen Polymers gemischt werden. Zu den Schmelzmischverfahren gehört insbesondere das erfindungsgemäß bevorzugte Schmelzkentverfahren, welches beispielsweise durch kontinuierliches Schmelzkneten unter Verwendung einer Einschnecken-Knetmaschine, einer Doppelschnecken-Knetmaschine vom Verzahnungs-gleiche-Richtungs-Rotationstyp, Verzahnungs-verschiedene-Richtungs-Rotationstyp, Nichtverzahnungs-gleiche-Richtungs-Rotationstyp, Nichtverzahnungs-verschiedene-Richtungs-Rotationstyp, oder anderer Typen oder durch Batch-Schmelzkneten unter Verwendung einer Walzenknetmaschine, einer Banbury-Knetmaschine oder ähnlichem realisierbar ist. Denkbar ist weiterhin eine Kombination aus einem Trockenmischverfahren und einem Schmelzmischverfahren.

Weiterhin ist die Reihenfolge und die Art und Weise der Zugabe der einzelnen Komponenten i), ii) und gegebenenfalls iii) in die Mischvorrichtung grundsätzlich unkritisch. So können beispielsweise zunächst das thermoplastische Polymer und gegebenenfalls die Zusatzstoffe in der Mischvorrichtung vorgelegt und erst anschließend das Formtrennmittel zugesetzt werden. Denkbar ist auch, das Formtrennmittel oder einen Teil des Formtrennmittels zunächst mit einer oder mehreren anderen Komponenten der erfindungsgemäßen, thermoplastischen Zusammensetzung, beispielsweise mit einem oder mehreren Zusatzstoffen, zu vermischen und diese Mischung dann entweder zu dem bereits in der Mischvorrichtung befindlichen, thermoplastischen Polymer zuzugeben oder aber diese Mischung zunächst in der Mischvorrichtung vorzulegen und erst dann das thermoplastische Polymer zuzusetzen.

In weiteren Ausgestaltungen des erfindungsgemäßen Verfahrens zur Herstellung einer thermoplastischen Zusammensetzung erfolgt das Vermischen nach mindestens einer der nachfolgenden Maßnahmen:
M1) bei der Glasübergangstemperatur des thermoplastischen Polymers oder bei einer Temperatur oberhalb der Glasübergangstemperatur des thermoplastischen Polymers;
M2) wobei das Formtrennmittel flüssiger ist als das thermoplastische Polymer; oder
M3) wobei mindestens ein Teil des Formtrennmittels dem Vorläufer des thermoplastischen Polymers zugesetzt wird.

Es entspricht weiterhin erfindungsgemäßen Ausgestaltungen, wenn zwei oder mehrere der vorstehenden Maßnahmen kombiniert werden. So ergeben sich im Einzelnen als Ausgestaltungen die folgenden, anhand der Ziffernkombinationen dargestellten Maßnahmenkombinationen: M1M2, M1M3, M2M3 und M1M2M3.

Gemäß einer bevorzugten Ausführungsform M1 des erfindungsgemäßen Verfahrens erfolgt das Vermischen der Komponenten i), ii) und gegebenenfalls iii) im Verfahrensschritt iv) des erfindungsgemäßen Verfahrens durch ein Schmelzmischverfahren. In diesem Zusammenhang ist es insbesondere bevorzugt, dass das Vermischen im Verfahrensschritt iv) bei der Glasübergangstemperatur des thermoplastischen Polymers oder bei einer Temperatur oberhalb der Glasübergangstemperatur des thermoplastischen Polymers erfolgt. Besonders bevorzugt ist es in diesem Zusammenhang, dass das Vermischen bei einer Temperatur in einem Bereich von 5 Grad unterhalb der Glasübergangstemperatur (T_{g}) bis 200°C oberhalb der Glasübergangstemperatur des eingesetzten, thermoplastischen Polymers, besonders bevorzugt bei einer Temperatur in einem Bereich von 1 Grad unterhalb der Glasübergangstemperatur (T_{g}) bis 180°C oberhalb der Glasübergangstemperatur des eingesetzten, thermoplastischen Polymers und am meisten bevorzugt bei einer Temperatur in einem Bereich von 1 Grad oberhalb der Glasübergangstemperatur (T_{g}) bis 150°C oberhalb der Glasübergangstemperatur des eingesetzten, thermoplastischen Polymers, wobei jedoch die obere Grenze des Temperaturbereiches im Wesentlichen von der Zersetzungstemperatur des eingesetzten, thermoplastischen Polymers begrenzt wird. Ferner entspricht es erfindungsgemäßen Ausgestaltungen, wenn das Vermischen bei Temperaturen in einem Bereich von 10 bis 180°C und vorzugsweise 50 bis 150°C oberhalb der Glasübergangstemperatur des eingesetzten, thermoplastischen Polymers erfolgt.

In der erfindungsgemäßen Ausgestaltung M2, in der das Formtrennmittel flüssiger ist als das thermoplastische Polymer, ist es bevorzugt, das Formtrennmittel bei einer Temperatur einzusetzen, bei der dieses flüssig und das thermoplastische Polymer noch nicht flüssig ist. Bevorzugt liegt hier die Temperatur des thermoplastischen Polymers unterhalb der Glasübergangstemperatur dieses Polymers. So ist es bevorzugt, wenn sich die Schmelztemperatur des Formtrennmittels und die Glasübergangstemperatur des thermoplastischen Polymers um mindestens 5°C, vorzugsweise mindestens 10°C und besonders bevorzugt mindestens 30°C unterscheiden. Weiterhin ist es in dieser Ausgestaltung und auch allgemein bevorzugt, das thermoplastische Polymer als Granulat einzusetzen. Im Allgemeinen kommen alle dem Fachmann bekannten Granulatformen mit kugelartiger oder zylinderartiger Raumform auch vorliegend in Betracht. Die mittels Siebanalyse bestimmte Granulatgröße liegt für mindestens 70 Gew.-% der Granulatteilchen in einem Bereich von 0,01 bis 5 cm und vorzugsweise in einem Bereich von 0,1 bis 4 cm. Durch die Vorgehensweise gemäß dieser Ausgestaltung können die Oberflächen der Granulatteilchen mindestens teilweise mit dem erfindungsgemäßen Formtrennmittel überzogen werden, so dass ein mindestens teilweise gecoatetes thermoplastisches Polymergranulat erhalten wird. Dieses erlaubt eine möglichst homogene Verteilung des erfindungsgemäßen Formtrennmittels in der thermoplastischen Zusammensetzung, insbesondere wenn diese als Formulierung für die später erfolgende Extrudierung konfektioniert wird.

In der erfindungsgemäßen Ausgestaltung M3, in der das Formtrennmittel dem Vorläufer des thermoplastischen Polymers zugesetzt wird, kommen Formtrennmittel in flüssiger und auch in fester Form in Betracht. Als Vorläufer des thermoplastischen Polymers kommen grundsätzlich alle dem Fachmann bekannten Vorstufen vor dem Erhalt des thermoplastischen Polymers in betracht. Hierunter fallen insbesondere Vorstufen, die ein geringeres Molekulargewicht als das endgültige thermoplastische Polymer aufweisen. Hierbei ist es bevorzugt, dass das Molekulargewicht des Vorläufers sich von dem des fertigen thermoplastischen Polymers um mindestens das 1,1-, vorzugsweise mindestens das 1,5- und besonders bevorzugt mindestens um das 2-Fache unterscheidet. Neben den zur Herstellung des thermoplastischen Polymers eingesetzten Monomeren und Oligomeren, die vorzugsweise aus 2 bis 100 Monomeren bestehen, gehört, insbesondere bei Polykondensaten, ein Vorpolymer, das, meist durch Hitzebehandlung, zu dem fertigen thermoplastischen Polymer auspolymerisiert wird. Vorzugsweise basiert das Vorpolymer auf mehr als 100 Monomeren als Wiederholungseinheiten, wobei die Zahl der Monomere als Wiederholungseinheiten und damit das endgültige Molekulargewicht des fertigen thermoplastischen Polymers nicht erreicht wird. Somit ist es besonders bevorzugt, das erfindungsgemäße Formtrennmittel jeweils den Monomeren, Oligomeren oder dem Vorpolymer oder mindestens zwei von diesen zuzusetzen. Hierdurch wird neben einer homogenen Verteilung des erfindungsgemäßen Formtrennmittels auch, meist durch die bei der Polymerisation oder Auspolymerisation herrschenden Bedingungen, eine Einarbeitung des Formtrennmittels durch chemische Bindungen mit dem thermoplastischen Polymer erreicht.

Sofern die im Verfahrensschritt iv) im Falle eines Schmelzmischverfahrens erhaltene, erhitzte Zusammensetzung nicht unmittelbar der Formkörperherstellung zugeführt wird, kann das Verfahren auch noch den weiteren Verfahrensschritt v) umfassen:
v) Abkühlen der thermoplastischen Zusammensetzung, vorzugsweise auf eine Temperatur in einem Bereich von 20 bis 30°C, besonders bevorzugt auf Raumtemperatur.

Weiterhin kann die thermoplastische Zusammensetzung, welche im Verfahrensschritt iv) erhalten wurde, vor, während oder auch nach Durchführung des Verfahrensschrittes v), gegebenenfalls jedoch auch nach dem Verfahrensschritt iv) und ohne Durchführung des Verfahrensschrittes v) noch einer Granulierung zugeführt werden.

Weiterhin ist es im Zusammenhang mit dem erfindungsgemäßen Verfahren bevorzugt, dass die Komponenten a) bis c) in solchen relativen Mengen miteinander vermischt werden, dass die durch das Vermischen der Komponenten a) bis c) erhaltene, thermoplastische Zusammensetzung
a1) 60 bis 99,99 Gew.-%, besonders bevorzugt 80 bis 99,8 Gew.-% und am meisten bevorzugt 90 bis 99,6 Gew.-% des thermoplastischen Polymers,
b1) 0,01 bis 20 Gew.-%, besonders bevorzugt 0,1 bis 10 Gew.-% und am meisten bevorzugt 0,2 bis 5 Gew.-% des Formtrennmittels und
c1) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a) bis c) 100 Gew.-% beträgt.

In einer anderen erfindungsgemäßen Verfahrensausgestaltung ist es bevorzugt, dass die Komponenten a2) bis d2) in solchen relativen Mengen miteinander vermischt werden, dass die durch das Vermischen der Komponenten a2) bis d2) erhaltene, thermoplastische Zusammensetzung
a2) 1 bis 69,99 Gew.-%, besonders bevorzugt 1,5 bis 49,8 Gew.-% und am meisten bevorzugt 2 bis 19,6 Gew.-% des thermoplastischen Polymers,
b2) 0,01 bis 20 Gew.-%, besonders bevorzugt 0,1 bis 10 Gew.-% und am meisten bevorzugt 0,2 bis 5 Gew.-% des Formtrennmittels,
c2) mindestens 10 Gew.-%, vorzugsweise mindestens 20 Gew.-% und besonders bevorzugt mindestens 30 Gew.-% einer biologisch abbaubaren Füllkomponente und
d2) 0 bis 20 Gew.-%, besonders bevorzugt 0,1 bis 10 Gew.-% und am meisten bevorzugt 0,2 bis 5 Gew.-% der weiteren Zusatzstoffe,
jeweils bezogen auf das Gesamtgewicht der thermoplastischen Zusammensetzung, enthält, wobei die Summe der Komponenten a2) bis d2) 100 Gew.-% beträgt.

Erfindungsgemäß bevorzugt ist es darüber hinaus, dass im Verlaufe des erfindungsgemäßen Verfahrens zur Herstellung einer thermoplastischen Zusammensetzung ein gesättigtes, α-olefinisches Oligomer aus mindestens einem C₆-C₁₈ α-Olefin in höchstens einer solchen Menge eingesetzt wird, dass die durch das Vermischen der Komponenten a) bis c) erhaltene, thermoplastische Zusammensetzung weniger als 0,001 Gew.-%, besonders bevorzugt weniger als 0,0005 Gew.-% und am meisten bevorzugt weniger als 0,0001 Gew.-% des gesättigten, α-olefinischen Oligomers enthält.

Einen Beitrag zur Lösung der eingangs genannten Aufgaben leistet weiterhin die durch das vorstehend beschriebene Verfahren erhältliche, thermoplastische Zusammensetzung. Hier und allgemein ist es bevorzugt, dass die thermoplastische Zusammensetzung eine Vergilbungsindex von kleiner als 6,64, vorzugsweise kleiner 6, besonders bevorzugt kleiner 5 sowie ferner bevorzugt kleiner 4 und darüber hinaus bevorzugt kleiner 3 zeigt. Der Vergilbungsindex ist der Gelbwert, der als b*-Wert gemäß dem L*,a*,b*-Farbsystem einer Probe der zu untersuchenden Zusammensetzung nach DIN 5033 gemessen wird. Oftmals liegt der Vergilbungsindex nicht unter 1 oder 2.

Einen Beitrag zur Lösung der eingangs genannten Aufgabe leistet auch ein Verfahren zur Herstellung eines auf einer thermoplastischen Zusammensetzung basierenden Formkörpers, umfassend die Verfahrensschritte:
I) Bereitstellen einer erfindungsgemäßen, thermoplastischen Zusammensetzung;
II) Erhitzen der thermoplastischen Zusammensetzung auf die Glasübergangstemperatur des thermoplastischen Polymers oder auf einer Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

Im Schritt I) des erfindungsgemäßen Verfahrens zur Herstellung eines Formkörpers wird zunächst eine erfindungsgemäße, thermoplastische Zusammensetzung bereitgestellt, wobei diese Bereitstellung vorzugsweise durch ein Verfahren umfassend die Verfahrensschritte i), ii), iv) und gegebenenfalls iii) und/oder v) erfolgt.

Sodann wird im Verfahrensschritt II) die thermoplastische Zusammensetzung auf die Glasübergangstemperatur des thermoplastischen Polymers oder auf einer Temperatur oberhalb der Glasübergangstemperatur des thermoplastischen Polymers erhitzt. In diesem Zusammenhang ist es wiederum bevorzugt, dass das Erhitzen der thermoplastischen Zusammensetzung auf eine Temperatur in einem Bereich von 5 Grad unterhalb der Glasübergangstemperatur (T_{g}) bis 100°C oberhalb der Glasübergangstemperatur des eingesetzten, thermoplastischen Polymers, besonders bevorzugt auf eine Temperatur in einem Bereich von 1 Grad unterhalb der Glasübergangstemperatur (T_{g}) bis 50°C oberhalb der Glasübergangstemperatur des eingesetzten, thermoplastischen Polymers und am meisten bevorzugt auf eine Temperatur in einem Bereich von 1 Grad oberhalb der Glasübergangstemperatur (T_{g}) bis 20°C oberhalb der Glasübergangstemperatur des eingesetzten, thermoplastischen Polymers erfolgt, wobei jedoch auch hier die obere Grenze des Temperaturbereiches im wesentlichen von der Zersetzungstemperatur des eingesetzten, thermoplastischen Polymers begrenzt wird.

Grundsätzlich können die Verfahrensschritte I) und II) zeitgleich oder hintereinander durchgeführt werden. Eine gleichzeitige Durchführung der Verfahrensschritte I) und II) ist beispielsweise dann sinnvoll, wenn die thermoplastische Zusammensetzung mittels eines Schmelzmischverfahrens hergestellt wird. Hier kann es gegebenenfalls vorteilhaft sein, die durch das Schmelzmischverfahren hergestellte Zusammensetzung unmittelbar in einen Formkörper zu überführen. Eine nacheinander erfolgende Durchführung der Verfahrensschritte I) und II) ist beispielsweise dann sinnvoll, wenn die thermoplastische Zusammensetzung mittels eines Trockenmischverfahrens hergestellt wird oder aber wenn die thermoplastische Zusammensetzung zwar mittels eines Schmelzmischverfahrens hergestellt wird, jedoch nicht unmittelbar nach der Herstellung der Bildung eines Formkörpers unterzogen wird sonderen vielmehr zunächst gemäß dem Verfahrensschritt v) abgekühlt wird.

Im Verfahrensschritt III) des erfindungsgemäßen Verfahrens zur Herstellung eines Formkörpers wird aus der im Verfahrensschritt II) hergestellten, erhitzten, thermoplastischen Zusammensetzung ein Formkörper hergestellt. Als Verfahren zur Herstellung eines Formkörpers kommen insbesondere das Spritzgießen, das Extrusionsformen, das Kompressionsformen, das Schichtformen, das Laminierungsformen, das Hohlformen, das Vakuumformen und das Transferformen in Betracht, wobei das Spritzgießen besonders bevorzugt ist.

Weiterhin entspricht es einer Ausgestaltung des erfindungsgemäßen Verfahrens zur Herstellung eines thermoplastischen Formkörpers, dass in mindestens einem weiteren Verfahrensschritt IV) mindestens ein Teilbereich des in Verfahrensschritt III) erhaltenen Formkörpers als Formkörperrohling dient und in seinem Massequerschnitt gegenüber verringert wird. Bei dem Massequerschnitt handelt es sich um den Querschnitt eines Bereiches des Formkörpers, der massiv aus der erfindungsgemäßen thermoplastischen Formmasse besteht. Beispielsweise bei Behältern oder Gebinden stellt der Massequerschnitt die Dicke eine Wandung dieser Behälter oder Gebinde dar. Bei eher faden- oder strangförmig ausgebildeten Formkörpern stellt der Massequerschnitt die Dicke dieser Fäden oder Stränge dar. Bei eher flächigen Gebilden wie Platten, Lagen, Bahnen, Filmen oder Folien stellt der Massequerschnitt die Stärke dieser flächigen Gebilde dar. Für das Verringern des Massequerschnitts kommen grundsätzlich alle dem Fachmann hierzu bekannten und geeigneten Methoden in Betracht. Hierunter fallen beispielsweise das Strecken in eine oder zwei Richtungen, Ziehen in eine oder zwei Richtungen, Schleudern oder Blasen, die jeweils vorzugsweise bei erhöhten Temperaturen erfolgen, bei denen die erfindungsgemäße thermoplastische Zusammensetzung so weich oder gar flüssig ist, dass ein Strecken, Ziehen Schleudern oder Blasen erfolgen kann. Der Teilbereich, in dem die Querschnittsverringerung erfolgt, macht vorzugsweise mindestens 50% und besonders bevorzugt mindesten 80% des in Schritt III) erhaltenen Formkörpers aus. Allgemein erfolgt das Strecken oder Ziehen, wenn aus dem in Schritt III) erhaltenen Formkörper eine Faser erhalten werden soll. Bei der Herstellung von Folien kann zum einen das Ziehen oder Strecken in eine oder mehrer Dimensionen erfolgen. So kann die aus einem Extruder laufende Bahn mit einer im Vergleich zu der Austrittsgeschwindigkeit aus dem Extruder höheren Geschwindigkeit auf eine Rolle gezogen werden. Soll hingegen ein Behälter oder Gebinde erhalten werden, so wird außer dem Strecken, Ziehen und Schleudern vornehmlich das Blasen in Schritt IV) eingesetzt. Hierbei erfolgt die Massequerschnittsverringerung durch das anlegen eines Gasdrucks. Der Gasdruck wird allgemein so gewählt, dass die meist mindestens auf Glasübergangstemperatur erhitzte thermoplastische Zusammensetzung des in Schritt III) erhaltenen Formkörpers gedehnt werden kann. In der Regel wird die Dehnung durch die Verwendung eines die Endform des Formkörpers habende Form begrenzt. So lässt sich neben Behältern wie Gefrierboxen, Schalen und Verpackungen für Lebensmittcl wie Obst, Gemüse oder Fleisch sowie Arzneimittel als Tabletten, Kapseln, Zäpfchen oder Pulvern auch Gebinde für Flüssigkeiten herstellen. Diese Flüssigkeitsgebinde können neben für Flüssigkeiten der kosmetischen oder pharmazeutischen Industrie in der Lebensmittelindustrie, vorzugsweise in der Getränkeindustrie auch als Mehrweggebinde wie PET-A-Flaschen eingesetzt werden. Es weiterhin möglich, dass zwei oder mehrere der Verfahrenschritte I) bis IV) durch weitere Verfahrensschritte ergänzt werden und/oder zumindest zeitlich überlappende verlaufen. Dieses gilt insbesondere für die Verfahrensschritte III) und IV).

Insbesondere bei der Herstellung von PET- oder PET-PLA-Flaschcn wird in Schritt I) eine mindestens 80 Gew.-% PET oder einer Mischung aus einem Mehrfachzucker wie Stärke, meist mit einem auf die Mischung bezogenen Anteil in einem Bereich von 30 bis 70 Gew.-%, vorzugsweise in einem Bereich von 40 bis 60 Gew.-%, mit PLA mit PET beinhaltenden erfindungsgemäße thermoplastische Zusammensetzung bereitgestellt. Diese wird über Schritt II) zu einem Formkörperrohling in Schritt III) verarbeitet, der neben einem Verschlussbercich meist einen auf den Verschlussbereich folgenden stabilisierende Kragen aufweist, auf den ein hülsenartiger Flaschenbereich folgt. Durch den Verschlussbereich wird in Schritt IV) Gas eingespeist, das den Flaschenbereich bis zu einer Begrenzung durch die Flaschenform ausweitetet. Dabei nimmt gleichzeitig mit der Zunahme des Volumens der Flaschenbereichs der Massequerschnitt der Wandung des Flaschenbereichs ab. Für diese Art der Herstellung lassen sich beispielsweise Streckblasmaschinen einsetzen, die unter anderem von Böhm Fertigungstechnik in Suhl GmbH, Deutschland, angeboten werden.

Weiterhin lassen sich erfindungsgemäß neben Flaschen auch andere Formkörper herstellen. Hierunter fallen Ein- und Mehrweggebinde, wie Teller, Schalen, Töpfe oder Becher, und Bestecke wie Messer, Gabeln oder Löffel. Besonders eignen sich die erfindungsgemäßen biologisch abbaubaren thermoplastischen Zusammensetzungen für diese Anwendungen.

Einen weiteren Beitrag zur Lösung mindestens eines Teils der eingangs genannten Aufgaben leisten auch Formkörper, vorzugsweise eine Flasche, besonders bevorzugt eine PET-Flasche, die durch das vorstehend beschriebene, erfindungsgemäße Verfahren zur Herstellung eines Formkörpers erhältlich sind. Bevorzugt weist dieser Formkörper einen Vergilbungsindex von kleiner als 6,64, vorzugsweise kleiner 6, besonders bevorzugt kleiner 5 sowie ferner bevorzugt kleiner 4 und darüber hinaus bevorzugt kleiner 3 zeigt. Oftmals liegt der Vergilbungsindex nicht unter 1 oder 2. Der Vergilbungsindex wird wie zuvor beschrieben bestimmt.

Einen Beitrag zur Lösung der eingangs genannten Aufgaben leistet auch die Verwendung eines vorstehend beschriebenen Formtrennmittels, insbesondere beinhaltend eine Hydroxycarbonsäure, einen Ester aus einer Hydroxycarbonsäure oder aus einem Derivat einer Hydroxycarbonsäure und einer Alkohol mit einem oder mehreren Hydroxyl-Gruppen oder einer Verbindung mit einer oder mehreren Epoxid-Gruppen, oder eine Mischung aus einer Hydroxycarbonsäure und dem Ester aus einer Hydroxycarbonsäure oder aus einem Derivat einer Hydroxycarbonsäure und einem Alkohol mit einer oder mehreren Hydroxyl-Gruppen oder einer Verbindung mit einer oder mehreren Epoxid-Gruppen, als Formtrennmittel in thermoplastischen Zusammensetzungen, insbesondere als Formtrennmittel in auf thermoplastischen Polyestern basierenden, thermoplastischen Zusammensetzungen.

Als Formtrennmittel und als thermoplastische Polymere sind auch hier diejenigen Formtrennmittel und thermoplastischen Polymere bevorzugt, die bereits eingangs im Zusammenhang mit der erfindungsgemäßen, thermoplastischen Zusammensetzung als bevorzugte Formtrennmittel und thermoplastischen Polymere genannt wurden.

Die Erfindung wird nun anhand nicht limitierender Beispiele näher erläutert.

### BEISPIELE

### Herstellen einer thermoplastischen Zusammensetzung

In einem 15 kg Henschel-Mischer werden 6 kg Polyethylenterephthalat (PET SP04 der Firma Catalana de Polimers) eingetragen. Die Mischwandtemperatur betrug 40°C. Des Weiteren wurden 0,5 Gew.-% gehärtetes Rizinusöl (Loxiol G15 ein Produkt der Cognis Olcochemicals GmbH, Deutschland) als Formtrennmittel zugesetzt. Anschließend wurde das Material auf einem Granulator (ZSK 26Mcc) mit Stopfschnecke granuliert.

### Herstellen von Formkörpern aus der thermoplastischen Zusammensetzung

Zur Herstellung von Formkörpern aus der thermoplastischen Zusammensetzung wurde eine vollhydraulische Spritzgießmaschine mit einer hydraulischen Schließeinheit vom Typ Battenfeld HM800/210 eingesetzt. Die maximale Schließkraft beträgt 800 kN, der Schneckendurchmesser beträgt 25 mm. Als Versuchswerkzeug wurde ein Werkzeug mit einem konisch zulaufenden, rechteckigen Kern verwendet. Für die Bestimmung der Entformungskraft wurde eine Kraftmessdose mit einem maximalen Messbereich von 2 kN an die Auswerferstange angebracht. Die Vortrocknung der Formmasse erfolgte bei etwa 225°C für etwa 4 Stunden.

Die Entformungskräfte (angegeben in N) wurden bei 10 Zyklen gemessen:

| PET SP04 | PET SP04 + Loxiol G15 |
|---|---|
| 861 | 485 |
| 881 | 425 |
| 880 | 528 |
| 877 | 446 |
| 870 | 561 |
| 880 | 527 |
| 879 | 509 |
| 872 | 513 |
| 877 | 625 |
| 873 | 450 |
| Mittelwert: 875 | Mittelwert: 507 |

Der vorstehenden Tabelle ist zu entnehmen, dass der Zusatz von Rizinusöl als Formtrennmittel in der thermoplastischen Zusammensetzung zu einer signifikanten Verbesserung der Entformbarkeit und zu einem erkennbar verbesserten Ablöseverhalten von den Wandungen eines Spritzgießwerkzeugs führt. Es wurden Formkörper mit hoher Transparenz und glatter und gleichmäßiger Oberflächenstruktur erhalten. Weiterhin konnte ein Vergilbungsindex nach DIN 5033 im Durchschnitt von 6,64 für PET SP04 und 2,4 für PET SP04 + Loxiol G15 ermittelt werden. Der Vergilbungsindex ist der Gelbwert, der als b*-Wert gemäß dem L*,a*,b*-Farbsystem einer Probe der zu untersuchenden Zusammensetzung nach DIN 5033 gemessen wird.

## Patentansprüche

1. Eine thermoplastische Zusammensetzung beinhaltend
a) einen aromatischen Polyester oder einen teilweise aromatischen Polyester,
b) ein Formtrennmittel, sowie
c) gegebenenfalls weitere Zusatzstoffe,
wobei das Formtrennmittel
- eine Hydroxycarbonsäure;
- einen Ester aus
-- einer Hydroxycarbonsäure,
-- einem Derivat einer Hydroxycarbonsäure,
-- einer Ketocarbonsäure, oder
-- einem Derivat einer Ketocarbonsäure und ein oder mehrere von
-- einem Alkohol mit einer oder mehreren Hydroxyl-Gruppen oder
-- einer Verbindung mit einer oder mehreren Epoxid-Gruppen; oder
- eine Mischung aus einer Hydroxycarbonsäure und dem Ester aus einer Hydroxycarbonsäure, einem Derivat einer Hydroxycarbonsäure, einer Ketocarbonsäure oder einem Derivat einer Ketocarbonsäure und ein oder mehrere von einem Alkohol mit einer oder mehreren Hydroxyl-Gruppen oder einer Verbindung mit einer oder mehreren Epoxid-Gruppen,
beinhaltet;
wobei bei dem aromatischen Polyester alle Esterverknüpfungen an die aromatischen Ringe angelagert sind;
wobei der teilweise aromatische Polyester aus mindestens einer aromatischen Dicarbonsäure und mindestens einem aliphatischen Diol erhalten wurde.

2. Die thermoplastische Zusammensetzung nach Anspruch 1, wobei das Formtrennmittel einen Ester aus einer Hydroxycarbonsäure und einem Alkohol mit einer oder mehreren Hydroxyl-Gruppen beinhaltet

3. Die thermoplastische Zusammensetzung nach Anspruch 1 oder 2 wobei die Hydroxycarbonsäure eine gesättigte Hydroxycarbonsäure, eine ungesättigte Hydroxycarbonsäure oder eine Mischung aus einer gesättigten und einer ungesättigten Hydroxycarbonsäure mit einer Kohlenstoffzahl in einem Bereich von 6 bis 26 ist.

4. Die thermoplastische Zusammensetzung nach Anspruch 3, wobei der Alkohol eine Anzahl an Hydroxyl-Gruppen in einem Bereich von 2 bis 9 aufweist.

5. Die thermoplastische Zusammensetzung nach Anspruch 3 oder 4, wobei die Hydroxyl-Gruppen des Alkohols zu mindestens 10 Mol-% nicht mit der Carbonsäure-Gruppe der Hydroxycarbonsäure verestert sind.

6. Die thermoplastische Zusammensetzung nach einem der vorhergehenden Ansprüche, wobei die thermoplastische Zusammensetzung
a) 60 bis 99,99 Gew.-% des thermoplastischen Polymers,
b) 0,01 bis 20 Gew.-% des Formtrennmittels und
c) 0 bis 20 Gew.-% der weiteren Zusatzstoffe,
jeweils bezogen auf das Gesamtgewicht der thermoplastischen Zusammensetzung, enthält, wobei die Summe der Komponenten a) bis c) 100 Gew.-% beträgt.

7. Ein Verfahren zur Herstellung einer thermoplastischen Zusammensetzung beinhaltend
a) einen aromatischen Polyester oder einen teilweise aromatischen Polyester,
b) ein Formtrennmittel, sowie
c) gegebenenfalls weitere Zusatzstoffe,
beinhaltend die Verfahrensschritte:
i) Bereitstellen eines aromatischen Polyesters oder eines teilweise aromatischen Polyesters;
ii) Bereitstellen des Formtrennmittels nach einem der Ansprüche 1 bis 6;
iii) gegebenenfalls Bereitstellen weiterer Zusatzstoffe;
iv) Vermischen der Komponenten i), ii) und gegebenenfalls iii);
wobei bei dem aromatischen Polyester alle Esterverknüpfungen an die aromatischen Ringe angelagert sind;
wobei bei der teilweise aromatische Polyester aus mindestens einer aromatischen Dicarbonsäure und mindestens einem aliphatischen Diol erhalten wurde.

8. Das Verfahren nach Anspruch 7, wobei das Vermischen nach mindestens einer der nachfolgenden Maßnahmen erfolgt:
M1) bei der Glasübergangstemperatur des thermoplastischen Polymers oder bei einer Temperatur oberhalb der Glasübergangstemperatur des thermoplastischen Polymers;
M2) wobei das Formtrennmittel flüssiger ist als das thermoplastische Polymer; oder
M3) wobei mindestens ein Teil des Formtrennmittels dem Vorläufer des thermoplastischen Polymers zugesetzt wird.

9. Das Verfahren nach Anspruch 7 oder 8, wobei das thermoplastische Polymer zu mehr als 90 Gew.-% auf Polyestern basiert.

10. Das Verfahren nach einem der Ansprüche 7 bis 9, wobei der Polyester ein polymerer Ester aus einer Polycarbonsäure und einem Polyol oder ein auf einer Hydroxycarbonsäure basierender, polymerer Ester ist.

11. Das Verfahren nach einem der Ansprüche 7 bis 10, wobei die Komponenten a) bis c) in solchen relativen Mengen miteinander vermischt werden, dass die durch das Vermischen der Komponenten a) bis c) erhaltene, thermoplastische Zusammensetzung
a) 60 bis 99,99 Gew.-% des thermoplastischen Polymers,
b) 0,01 bis 20 Gew.-% des Formtrennmittels und
c) 0 bis 20 Gew.-% der weiteren Zusatzstoffe,
jeweils bezogen auf das Gesamtgewicht der thermoplastischen Zusammensetzung, enthält, wobei die Summe der Komponenten a) bis c) 100 Gew.-% beträgt.

12. Eine thermoplastische Zusammensetzung, erhältlich durch das Verfahren nach einem der Ansprüche 7 bis 11.

13. Die thermoplastische Zusammensetzung nach Anspruch 12 mit einem Vergilbungsindex von kleiner 6,64.

14. Ein Verfahren zur Herstellung eines auf einer thermoplastischen Zusammensetzung basierenden Formkörpers, umfassend die Verfahrensschritte:
I) Bereitstellen einer thermoplastischen Zusammensetzung nach einem der Ansprüche 1 bis 6, 12 oder 13;
II) Erhitzen der thermoplastischen Zusammensetzung auf die Glasübergangstemperatur des thermoplastischen Polymers oder auf einer Temperatur oberhalb der Glasübergangstemperatur des thermoplastischen Polymers;
III) Herstellung eines Formkörpers aus der im Verfahrensschritt II) hergestellten, erhitzten, thermoplastischen Zusammensetzung.

15. Das Verfahren nach Anspruch 14, wobei in einem weiteren Verfahrensschritt IV) mindestens eine Teilbereich des in Verfahrenschritt III) erhaltenen Formkörpers in seinem Massequerschnitt gegenüber Verfahrenschritt III) verringert wird.

16. Ein Verfahren nach Anspruch 15, wobei die Querschnittsverringerung durch Anlegen eines Gasdrucks erfolgt.

17. Ein Verfahren nach einem der Ansprüche 15 bis 16, wobei der Formkörper ein Flüssigkeitsgebinde ist.

18. Ein Formkörper, erhältlich durch ein Verfahren nach Anspruch 17.

19. Der Formkörper nach Anspruch 18 mit einem Vergilbungsindex von kleiner 6,64.

20. Verwendung eines Formtrennmittels nach einem der Ansprüche 1 bis 6 in thermoplastischen Zusammensetzungen, insbesondere als Formtrennmittel in auf aromatischen Polyestern oder einen teilweise aromatischen Polyestern basierenden, thermoplastischen Zusammensetzungen.

21. Verwendung eines Formtrennmittels nach einem der Ansprüche 1 bis 6 bei der Herstellung von Flüssigkeitsgebinden aus auf aromatischen Polyestern oder einen teilweise aromatischen Polyestern basierenden thermoplastischen Polymeren.

## Claims

1. Thermoplastic composition comprising
a) an aromatic polyester or a partially aromatic polyester,
b) a mould-release agent, as well as
c) optionally further additives,
wherein the mould-release agent comprises
- a hydroxycarboxylic acid;
- an ester of
-- a hydroxycarboxylic acid,
-- a derivative of a hydroxycarboxylic acid,
-- a ketocarboxylic acid, or
-- a derivative of a ketocarboxylic acid and one or more of
-- an alcohol having one or more hydroxy groups
or
-- a compound having one or more epoxy groups;
or
- a mixture of a hydroxycarboxylic acid and of the ester derived from a hydroxycarboxylic acid, a derivative of a hydroxycarboxylic acid, a ketocarboxylic acid or a derivative of a ketocarboxylic acid and one or more of an alcohol having one or more hydroxy groups or a compound having one or more epoxy groups;
wherein in the aromatic polyester all of the ester links are attached to the aromatic rings;
wherein the partially aromatic polyester was obtained from at least one aromatic dicarboxylic acid and at least one aliphatic diol.

2. Thermoplastic composition according to Claim 1, wherein the mould-release agent comprises an ester of a hydroxycarboxylic acid and an alcohol having one or more hydroxy groups.

3. Thermoplastic composition according to Claim 1 or 2, wherein the hydroxycarboxylic acid is a saturated hydroxycarboxylic acid, an unsaturated hydroxycarboxylic acid or a mixture of a saturated and an unsaturated hydroxycarboxylic acid having a carbon number in the range from 6 to 26.

4. Thermoplastic composition according to Claim 3, wherein the alcohol has a number of hydroxy groups in the range from 2 to 9.

5. Thermoplastic composition according to Claim 3 or 4, wherein at least 10 mol% of the hydroxy groups of the alcohol have not been esterified with the carboxylic acid group of the hydroxycarboxylic acid.

6. Thermoplastic composition according to any of the preceding claims, wherein the thermoplastic composition comprises
a) from 60 to 99.99% by weight of the thermoplastic polymer,
b) from 0.01 to 20% by weight of the mould-release agent and
c) from 0 to 20% by weight of the further additives,
based in each case on the total weight of the thermoplastic composition, wherein the sum of components a) to c) is 100% by weight.

7. Process for the production of a thermoplastic composition including
a) an aromatic polyester or a partially aromatic polyester,
b) a mould-release agent, and also
c) optionally further additives,
comprising the following steps:
i) providing an aromatic polyester or a partially aromatic polyester;
ii) providing the mould-release agent according to any of Claims 1 to 6;
iii) optionally providing further additives;
iv) mixing of components i), ii) and optionally iii);
wherein in the aromatic polyester all of the ester links are attached to the aromatic rings;
wherein the partially aromatic polyester was obtained from at least one aromatic dicarboxylic acid and at least one aliphatic diol.

8. Process according to Claim 7, wherein the mixing takes place in accordance with at least one of the following measures:
M1) at the glass transition temperature of the thermoplastic polymer or at a temperature above the glass transition temperature of the thermoplastic polymer;
M2) wherein the mould-release agent is more liquid than the thermoplastic polymer; or
M3) wherein at least a part of the mould-release agent is added to the precursor of the thermoplastic polymer.

9. Process according to Claim 7 or 8, wherein more than 90% by weight of the thermoplastic polymer is based on polyesters.

10. Process according to any of Claims 7 to 9, wherein the polyester is a polymeric ester derived from a polycarboxylic acid and a polyol or is a polymeric ester based on a hydroxycarboxylic acid.

11. Process according to any of Claims 7 to 10, wherein the relative amounts of components a) to c) mixed with one another are such that the thermoplastic composition obtained via the mixing of components a) to c) comprises
a) from 60 to 99.99% by weight of the thermoplastic polymer,
b) from 0.01 to 20% by weight of the mould-release agent and
c) from 0 to 20% by weight of the further additives,
based in each case on the total weight of the thermoplastic composition, wherein the entirety of components a) to c) is 100% by weight.

12. Thermoplastic composition obtainable via the process according to any of Claims 7 to 11.

13. Thermoplastic composition according to Claim 12 with a yellowing index below 6.64.

14. Process for the production of a moulded article based on a thermoplastic composition, comprising the following steps:
I) providing a thermoplastic composition according to any of Claims 1 to 6, 12 or 13;
II) heating the thermoplastic composition to the glass transition temperature of the thermoplastic polymer or to a temperature above the glass transition temperature of the thermoplastic polymer;
III) producing a moulding from the heated thermoplastic composition produced in step II) .

15. Process according to Claim 14, wherein, in a further step IV), the solid cross section of at least one partial region of the moulded article obtained in step III) is reduced in comparison with step III).

16. Process according to Claim 15, wherein the cross-section reduction is achieved via application of a gas pressure.

17. Process according to either of Claims 15 or 16, wherein the moulded article is a container for liquid.

18. Moulded article obtainable via a process according to Claim 17.

19. Moulded article according to Claim 18 with a yellowing index below 6.64.

20. Use of a mould-release agent according to any of Claims 1 to 6 in thermoplastic compositions, in particular as mould-release agent in thermoplastic compositions based on aromatic polyesters or based on a partially aromatic polyester.

21. Use of a mould-release agent according to any of Claims 1 to 6 in the production of containers for liquid which are made of thermoplastic polymers based on aromatic polyesters or based on a partially aromatic polyester.

## Revendications

1. Composition thermoplastique contenant :
a) un polyester aromatique ou un polyester partiellement aromatique,
b) un agent de démoulage, et
c) éventuellement d'autres additifs,
dans laquelle l'agent de démoulage contient :
- un acide hydroxycarboxylique ;
- un ester constitué :
-- d'un acide hydroxycarboxylique,
-- d'un dérivé d'un acide hydroxycarboxylique,
-- d'un acide cétocarboxylique, ou
-- d'un dérivé d'un acide cétocarboxylique et un ou plusieurs parmi :
-- un alcool comportant un ou plusieurs groupes hydroxyle ou
-- un composé comprenant un ou plusieurs groupes époxyde ;
ou
- un mélange d'un acide hydroxycarboxylique et de l'ester d'un acide hydroxycarboxylique, d'un dérivé d'un acide hydroxycarboxylique, d'un acide cétocarboxylique ou d'un dérivé d'un acide cétocarboxylique et un ou plusieurs parmi un alcool comportant un ou plusieurs groupes hydroxyle ou un composé comportant un ou plusieurs groupes époxyde, dans laquelle, dans le polyester aromatique, toutes les liaisons ester se trouvent sur les cycles aromatiques ;
dans laquelle le polyester partiellement aromatique a été obtenu à partir d'au moins un acide dicarboxylique aromatique et au moins un diol aliphatique.

2. Composition thermoplastique selon la revendication 1, dans laquelle l'agent de démoulage contient un ester d'un acide hydroxycarboxylique et un alcool comportant un ou plusieurs groupes hydroxyle.

3. Composition thermoplastique selon la revendication 1 ou 2, dans laquelle l'acide hydroxycarboxylique est un acide hydroxycarboxylique saturé, un acide hydroxycarboxylique insaturé ou un mélange d'un acide hydroxycarboxylique saturé et d'un acide hydroxycarboxylique insaturé comportant un indice de carbone dans une plage de 6 à 26.

4. Composition thermoplastique selon la revendication 3, dans laquelle l'alcool présente un indice de groupe hydroxyle dans une plage de 2 à 9.

5. Composition thermoplastique selon la revendication 3 ou 4, dans laquelle les groupes hydroxyle de l'alcool ne sont pas estérifiés à au moins 10% en mole avec le groupe d'acide carboxylique de l'acide hydroxycarboxylique.

6. Composition thermoplastique selon l'une des revendications précédentes, la composition thermoplastique contenant :
a) 60 à 99,99% en poids du polymère thermoplastique
b) 0,01 à 20% en poids de l'agent de démoulage et
c) 0 à 20% en poids des autres adjuvants,
respectivement, par rapport au poids total de la composition thermoplastique, dans laquelle la somme des composants a) à c) est de 100% en poids.

7. Procédé de production d'une composition thermoplastique comprenant
a) un polyester aromatique ou un polyester partiellement aromatique,
b) un agent de démoulage, et
c) éventuellement, d'autres adjuvants,
comprenant les étapes du procédé :
i) mise à disposition d'un polyester aromatique ou d'un polyester partiellement aromatique ;
ii) mise à disposition de l'agent de démoulage selon l'une des revendications 1 à 6 ;
iii) éventuellement, mise à disposition d'autres adjuvants ;
iv) mélange des composants i), ii) et éventuellement iii) ;
dans lequel dans le polyester aromatique, toutes les liaisons ester se trouvent sur les cycles aromatiques ;
dans lequel le polyester partiellement aromatique a été obtenu à partir d'au moins un acide dicarboxylique aromatique et au moins un diol aliphatique.

8. Procédé selon la revendication 7, dans lequel le mélange s'effectue selon au moins l'une des mesures suivantes :
M1) à la température de transition vitreuse du polymère thermoplastique ou à une température supérieure à la température de transition vitreuse du polymère thermoplastique ;
M2) dans lequel l'agent de démoulage est plus fluide que le polymère thermoplastique ; ou
M3) dans lequel au moins une partie de l'agent de démoulage est ajoutée au précurseur du polymère thermoplastique.

9. Procédé selon la revendication 7 ou 8, dans lequel le polymère thermoplastique est à base de plus de 90% en poids de polyesters.

10. Procédé selon l'une des revendications 7 à 9, dans lequel le polyester est un ester polymère d'un acide polycarboxylique et d'un polyol ou un ester polymère à base d'acide hydroxycarboxylique.

11. Procédé selon l'une des revendications 7 à 10, dans lequel les composants a) à c) sont mélangés les uns aux autres en quantités relatives telles que la composition thermoplastique obtenue par le mélange des composants a) à c) est de
a) 60 à 99,99% en poids du polymère thermoplastique
b) 0,01 à 20% en poids de l'agent de démoulage et
c) 0 à 20% en poids des autres adjuvants,
respectivement, par rapport au poids total de la composition thermoplastique, dans lequel la somme des composants a) à c) est de 100% en poids.

12. Composition thermoplastique pouvant être obtenue par le procédé selon l'une des revendications 7 à 11.

13. Composition thermoplastique selon la revendication 12, présentant un indice de jaunissement inférieur à 6,64.

14. Procédé de production d'un corps de démoulage à base d'une composition thermoplastique, comprenant les étapes de procédé :
I) mise à disposition d'une composition thermoplastique selon l'une des revendications 1 à 6, 12 ou 13 ;
II) chauffage de la composition thermoplastique à la température de transition vitreuse du polymère thermoplastique ou à une température supérieure à la température de transition vitreuse du polymère thermoplastique ;
III) production d'un corps de démoulage à partir de la composition thermoplastique, chauffée, mise à disposition dans l'étape du procédé II).

15. Procédé selon la revendication 14, dans lequel dans une autre étape du procédé IV) au moins une zone partielle du corps moulé obtenu dans l'étape du procédé III) est réduite dans sa section transversale par rapport à l'étape du procédé III) .

16. Procédé selon la revendication 15, dans lequel la réduction de la section s'effectue par l'application d'une pression gazeuse.

17. Procédé selon l'une des revendications 15 à 16, dans lequel le corps moulé est un récipient de liquide.

18. Corps moulé pouvant être obtenu par un procédé selon la revendication 17.

19. Corps moulé selon la revendication 18, présentant un indice inférieur à 6,64.

20. Utilisation d'un agent de démoulage selon l'une des revendications 1 à 6, dans des compositions thermoplastiques, en particulier en tant qu'agent de démoulage dans des compositions thermoplastiques à base de polyesters aromatiques ou d'un polyester partiellement aromatique.

21. Utilisation d'un agent de démoulage selon l'une des revendications 1 à 6, dans la production de récipients de liquides à partir de polymères thermoplastiques à base de polyester aromatiques ou d'un polyester partiellement aromatique.
